(19) Europäisches Patentamt / European Patent Office / Office européen des brevets

(11) **EP 4 644 975 A1**

(12) **EUROPEAN PATENT APPLICATION**

(43) Date of publication:
**05.11.2025 Bulletin 2025/45**

(21) Application number: **24223431.8**

(22) Date of filing: **27.12.2024**

(51) International Patent Classification (IPC):
**G02C 7/02** (2006.01) **G02C 7/04** (2006.01)

(52) Cooperative Patent Classification (CPC):
**G02C 7/04; G02C 7/024;** G02C 2202/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.04.2024 US 202463640209 P**
**30.10.2024 TW 113141380**

(71) Applicant: **Visco Vision Inc.**
**Taoyuan City 33341 (TW)**

(72) Inventors:
• **CHEN, Ying-Yen**
  **33341 TAOYUAN CITY (TW)**
• **WANG, Yu-Yan**
  **33341 TAOYUAN CITY (TW)**

(74) Representative: **Viering, Jentschura & Partner mbB**
**Patent- und Rechtsanwälte**
**Am Brauhaus 8**
**01099 Dresden (DE)**

(54) **MYOPIA CONTROL CONTACT LENS**

(57) A myopia control contact lens (10) includes a central correction area (A1), an accommodative regulation area (A2) and a defocus area (A3). The central correction area (A1) provides a predetermined diopter. The accommodative regulation area (A2) surrounds the central correction area (A1), the accommodative regulation area (A2) has a first diopter distribution with N spherical aberration changes in a radial direction (Dr), and N is a positive integer. The defocus area (A3) surrounds the accommodative regulation area (A2), and the defocus area (A3) has a second diopter distribution in the radial direction (Dr). A maximum diopter of the second diopter distribution is obtained by adding a defocus variable to the predetermined diopter, and the defocus variable satisfies the following equation: $Y=a*X^2+b*X+c$, where X is the predetermined diopter, Y is a defocus variable, a is a first coefficient, b is a second coefficient, c is a constant, a and b range from 0 to 5, and c ranges from 0.5 to 15.

FIG. 6

EP 4 644 975 A1

**Description**

**FIELD OF THE INVENTION**

The present invention relates to a contact lens, and more particularly to a myopia control contact lens.

**BACKGROUND OF THE INVENTION**

Contact lenses, as with conventional eyeglasses, are designed for vision correction for conditions including myopia, hyperopia, astigmatism, presbyopia, and various other optical aberrations. With the continuous advancements in medical and optical sciences, a variety of functional contact lenses are constantly being introduced. Myopia control contact lenses are specially designed optical tools intended to slow the progression of myopia.

The myopia control contact lenses can achieve the above-mentioned effects through several mechanisms. For example, orthokeratology lenses, which are a type of rigid contact lenses, correct vision by reshaping the cornea and are typically worn at night. Another type of myopia control contact lenses is daily-wear soft contact lenses, which have a special optical design that maintains central vision while increasing a peripheral defocus effect, thereby controlling the progression of myopia.

However, in the currently available myopia control contact lenses, there are often problems with the correction power in the central area (e.g., under-correction in the center) that can lead to poor vision quality. Additionally, current designs of myopia control lenses typically exhibit several shortcomings, such as: increasing of accommodation lag, failing to reduce accommodative microfluctuations that intensify after myopia progression, and tending to result in hyperopic defocus on the nasal side of the peripheral retina after correction. These issues collectively result in the inability to effectively control the progression of myopia.

Therefore, there is an urgent need for a myopia control contact lens that can overcome the aforementioned issues and effectively manage the progression of myopia.

**SUMMARY OF THE INVENTION**

In response to the above-referenced technical inadequacies, the present invention provides a myopia control contact lens capable of effectively managing the progression of myopia.

In order to solve the above-mentioned problems, one of the technical aspects adopted by the present invention is to provide a myopia control contact lens including a central correction area, an accommodative regulation area and a defocus area. The central correction area provides a predetermined diopter. The accommodative regulation area surrounds the central correction area, and the accommodative regulation area has a first diopter distribution with N spherical aberration changes in a radial direction, where N is a positive integer. The defocus area surrounds the accommodative regulation area, and the defocus area has a second diopter distribution in the radial direction. A maximum diopter of the second diopter distribution is obtained by adding a defocus variable to the predetermined diopter, and the defocus variable satisfies the following equation: $Y=a*X^2+b*X+c$, where X is the predetermined diopter, Y is a defocus variable, a is a first coefficient, b is a second coefficient, c is a constant, a and b range from 0 to 5, and c ranges from 0.5 to 15.

Therefore, the myopia control contact lens provided by the present invention can achieve complete correction in the central correction area, thereby enhancing vision quality. Additionally, by configuring at least one spherical aberration change in the accommodative regulation area, the accommodation lag and the accommodative microfluctuations can be reduced. On the other hand, in the defocus area, the defocus variable is designed according to the myopia degree of a to-be-corrected eye, which can increase myopic degree shift on the peripheral retina, thereby achieving fully retinal myopic defocus. Through the aforementioned configurations, the myopia control contact lenses provided by the present invention can effectively suppress the progression of myopia.

These and other aspects of the present invention will become apparent from the following description of the embodiment taken in conjunction with the following drawings and their captions, although variations and modifications therein may be affected without departing from the spirit and scope of the novel concepts of the invention.

**BRIEF DESCRIPTION OF THE DRAWINGS**

The described embodiments may be better understood by reference to the following description and the accompanying drawings, in which:

FIG. 1 is a schematic top view of a myopia control contact lens according to one embodiment of the present invention;
FIG. 2 is a schematic perspective view of the myopia control contact lens according to one embodiment of the present invention;

FIG. 3 is a schematic cross-sectional view taken along line A-A of FIG. 1;

FIG. 4 is a diagram showing a diopter distribution of the myopia control contact lens utilizing one spherical aberration change according to one embodiment of the present invention;

FIG. 5 is a diagram showing a diopter distribution of the myopia control contact lens utilizing two spherical aberration changes according to one embodiment of the present invention;

FIG. 6 is a diagram showing the diopter distribution of the myopia control contact lens utilizing four spherical aberration changes according to one embodiment of the present invention; and

FIG. 7 is a graph showing a defocus variable versus a predetermined diopter according to one embodiment of the present invention.

## DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. Numbering terms such as "first," "second" or "third" can be used to describe various components, signals or the like, which are for distinguishing one component/signal from another one only, and are not intended to, nor should be construed to impose any substantive limitations on the components, signals or the like.

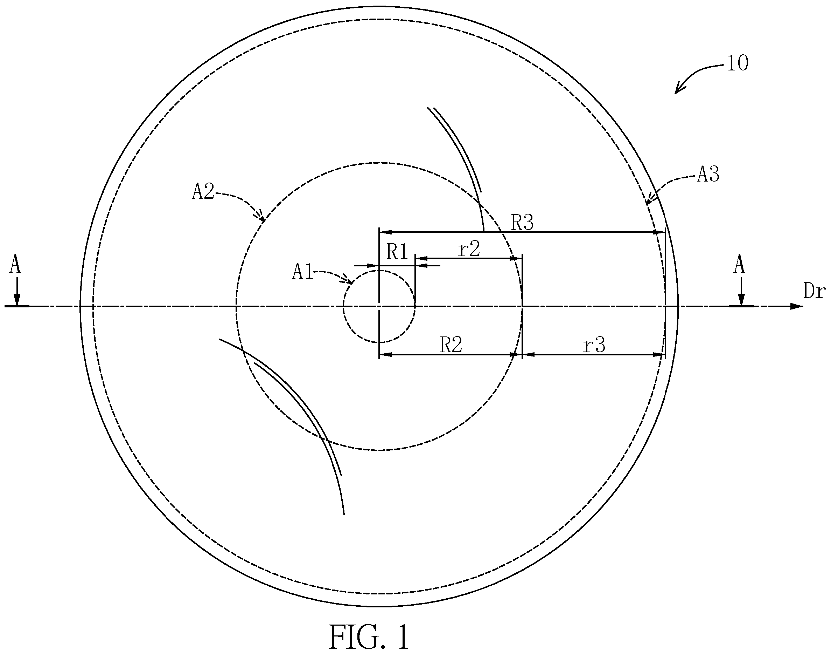

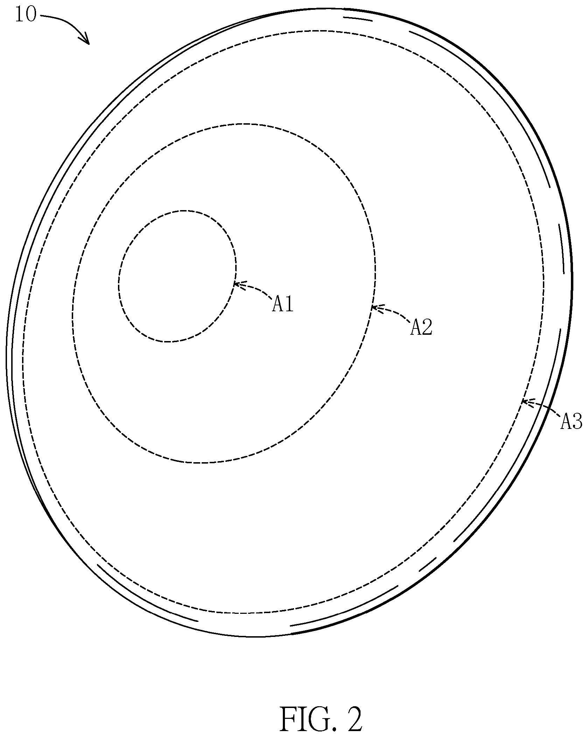

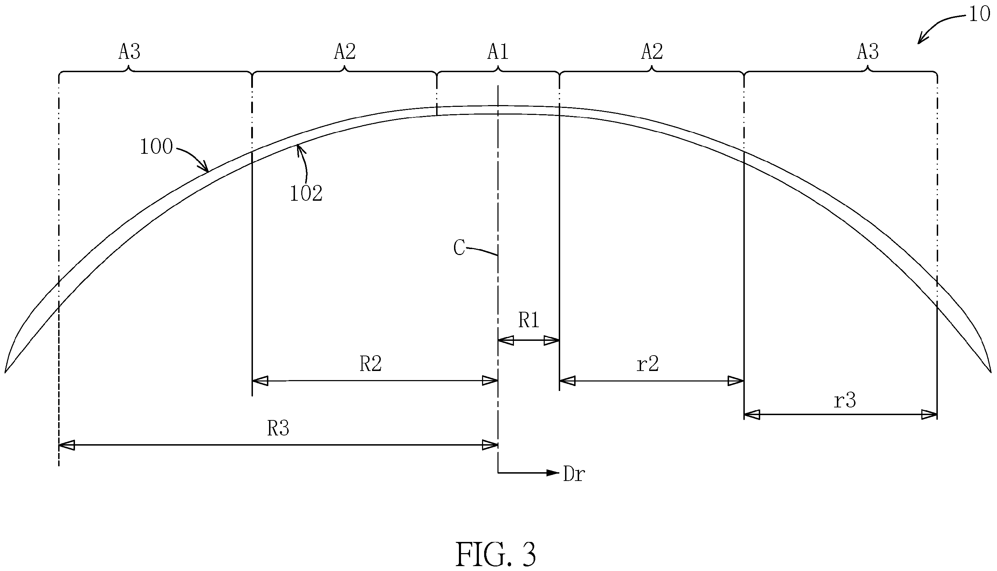

FIG. 1 is a schematic top view of a myopia control contact lens according to one embodiment of the present invention. FIG. 2 is a schematical perspective view of the myopia control contact lens according to one embodiment of the present invention. FIG. 3 is a schematic cross-sectional view taken along line A-A of FIG. 1.

Referring to FIGS. 1 to 3, one embodiment of the present invention provides a myopia control contact lens 10, which includes a central correction area A1, an accommodative regulation area A2 and a defocus area A3. The myopia control contact lens 10, for example, can be made of materials such as hydrogel or silicone hydrogel, which provides high water content and good oxygen permeability, making the myopia control contact lens 10 suitable for longer wear.

As shown in FIG. 1, in the myopia control contact lens 10, the central correction area A1 has a substantially circular shape, and the accommodative regulation area A2 and the defocus area A3 each have a substantially annular shape. The central correction area A1 can be located within a first radius range R1, the accommodative regulation area A2 can be located within the first radius range R1 and a second radius range R2, and the defocus area A3 can be located within the second radius range R2 and the third radius range R3. The second radius range R2 can include the first radius range R1 and a second outer diameter range r2, the third radius range R3 can include the second radius range R2 and a third outer diameter range r3, and the first radius range R1, the second outer diameter range r2 and the third outer diameter range r3 are continuously distributed along a radial direction Dr. In some embodiments of the present invention, the first radius range R1 is, for example, between 0 and 0.5 mm, the second outer diameter range r2 is, for example, between 0.5 and 2 mm, and the third outer diameter range r3 is greater than 2 mm.

For example, as shown in FIGS. 1 and 3, a center of the myopia control contact lens 10 is taken as a virtual central optical axis C, such that the central correction area A1, which is a circular area centered around the virtual central optical axis C, can be formed. The accommodative regulation area A2 is an annular area formed around the circular area (the central correction area A1) with the virtual central optical axis C as a center. Similarly, the defocus area A3 is another annular area formed around the annular area (the accommodative regulation area A2) with the virtual central optical axis C as a center. A total diameter of the myopia control contact lens 10 can range from 13.0 mm to 15.0 mm (i.e., a radius can range from 6.5 mm to 7.5 mm).

In addition, in the present embodiment, a lens body of the myopia control contact lens 10 has a front curve 100 and a base curve 102, which can be, for example, an optical system in which the front curve 100 has a single curvature and the base curve 102 is an aspherical surface, or an optical system in which both the front curve 100 and the base curve 102 are aspherical surfaces. It should be noted that details of the myopia control contact lens 10 provided by the present invention is further presented hereinafter through a detailed description of a diopter distribution. Those skilled in the art can determine various manufacturing parameters of a contact lens based on the diopter distribution disclosed in the present invention. These parameters include a radius of curvature distribution of the front curve 100 and the base curve 102, as well as a lens thickness required when using materials with different refractive indices, so as to manufacture the myopia control contact lens with the diopter distribution disclosed by the present invention. Since the method of manufacturing contact lens lenses based on the diopter distribution is well-known to those skilled in the relevant art, said method will not be further elaborated upon.

The central correction area A1 has a predetermined diopter for correcting the myopia of a to-be-adjusted eye. Specifically, within the central correction area A1, the predetermined diopter is the same as the diopter corresponding to a myopia degree of the to-be-adjusted eye, that is, the to-be-adjusted eye is completely corrected. The diopter changes continuously from the central correction area A1 to the accommodative regulation area A2. Since the central correction area A1 in the myopia control contact lens 10 achieves complete correction at the center, vision quality (of a wearer) can be enhanced.

The accommodative regulation area A2 surrounds the central correction area A1. In this embodiment, the accommodative regulation area A2 is used for the to-be-adjusted eye to adjust an accommodation lag and reduce accommodative microfluctuations. The performance of myopia control contact lens 10 can be assessed by measuring an accommodative response and accommodative microfluctuations of the eye after correction. The accommodative response reflects a relationship between an amount of accommodative response and a level of accommodative stimulus. When the amount of accommodative response is less than the level of accommodative stimulus, it is termed as accommodation lag, indicating insufficient accommodation. Conversely, when the amount of accommodative response exceeds the level of accommodative stimulus, it is known as accommodative lead, indicating over-accommodation. Additionally, accommodative microfluctuations occur when viewing nearby targets due to ciliary muscle spasms, causing tremors or instability. Unstable accommodative microfluctuations accumulate hyperopic defocus signals or produce blurry images on the retina, leading to relative visual form deprivation, which in turn triggers myopia and accelerates its progression. Clinically, excessive accommodation lag and accommodative microfluctuations can promote axial elongation of the eyeball, leading to the worsening of myopia.

To reduce accommodation lag and decrease accommodative microfluctuations, the accommodative regulation area A2 of the present invention is designed with N spherical aberration changes in the radial direction Dr, presenting a first diopter distribution. All diopters in the first diopter distribution are greater than a predetermined diopter, with N being a positive integer. More specifically, the N spherical aberration changes represent that in the accommodative regulation area A2, the first diopter distribution, which varies along the radial direction Dr, has regional maxima and minima with a total quantity of M. M is an integer, and when N is odd, M equals N minus 1. When N is even, M equals N. A quantity of regional maxima is M/2. A quantity of the regional minima can be M minus a quantity of the regional maxima. Based on the above rules, it is possible to design multiple myopia control contact lenses 10 with varying spherical aberration changes.

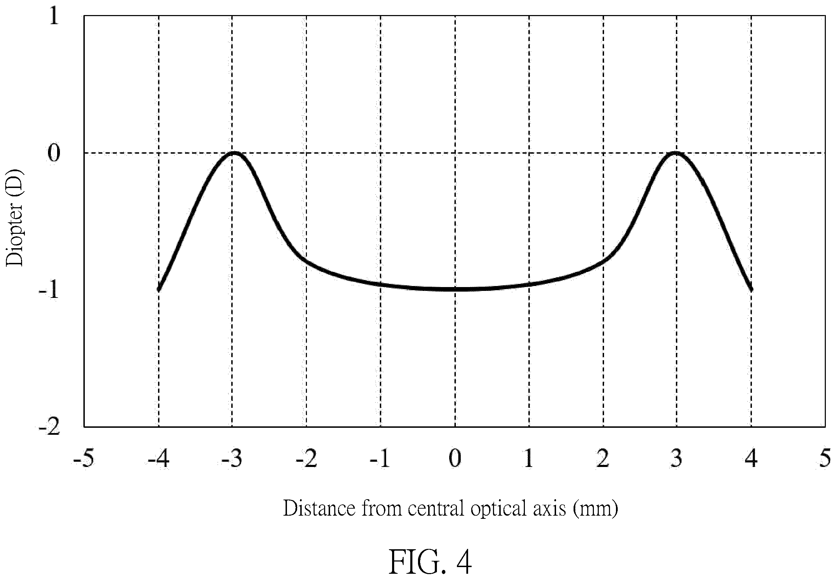

FIGS. 4, 5 and 6 are diagrams respectively showing diopter distributions of the myopia control contact lens utilizing one, two and four spherical aberration changes according to one embodiment of the present invention.

As can be seen from FIG. 4, when the myopia degree is -1D, within the central correction area A1 with a radius from 0mm to 0.5mm, the predetermined diopter is the same as the diopter corresponding to the myopia degree (i.e., a complete correction). More specifically, when the myopia control contact lens 10 adopts one spherical aberration change in the accommodative regulation area A2, the first diopter distribution varies along the radial direction Dr without any regional maximum or any regional minimum. Instead, the first diopter distribution continuously increases from an edge of the central correction area A1 (approximately at the radius of 0.5mm) to an edge of the defocus area A3 (approximately at the radius of 2mm). Moreover, in the first diopter distribution, all diopter values are greater than the predetermined diopter.

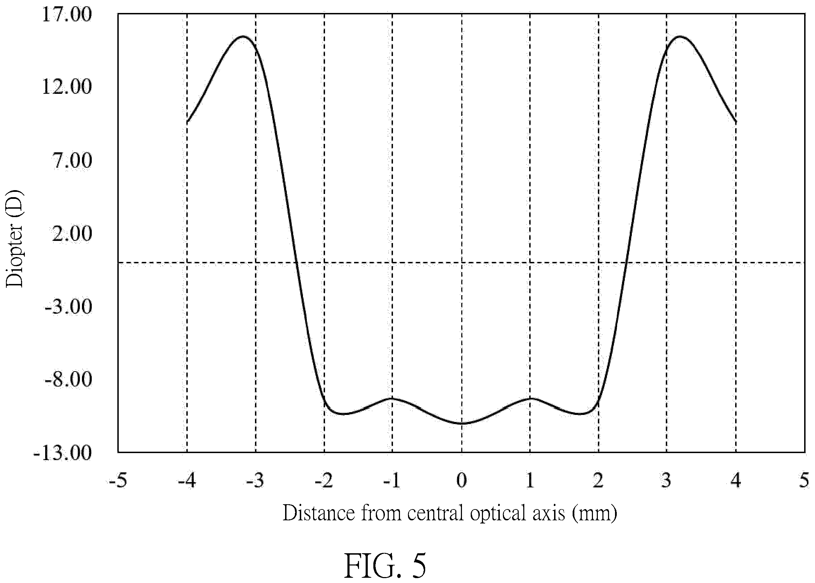

However, as shown in FIG. 5, when the myopia control contact lens 10 adopts two spherical aberration changes in the accommodative regulation area A2, the first diopter distribution varies along the radial direction Dr, exhibits one regional maximum area and one regional minimum area. The regional maximum area is an area of the first diopter distribution that includes a regional maximum along the radial direction Dr, and the regional minimum area is an area of the first diopter distribution that includes a regional minimum along the radial direction Dr. The first diopter distribution continuously increases from the edge of the central correction area A1 to a maximum in the first regional maximum area, then continuously decreases to a minimum in the second regional minimum area, and finally increases again towards the edge of the defocus area A3. In the first diopter distribution shown in FIG. 5, all diopter values are greater than the predetermined diopter. Along the radial direction Dr, a first region in the first diopter distribution is a regional maximum area, a diopter maximum in the regional maximum area is greater than diopter minima of the two regional minimum areas adjacent to the regional maximum area in the radial direction Dr. Therefore, the first diopter distribution shows a continuous S-shape inclined towards the positive diopter range.

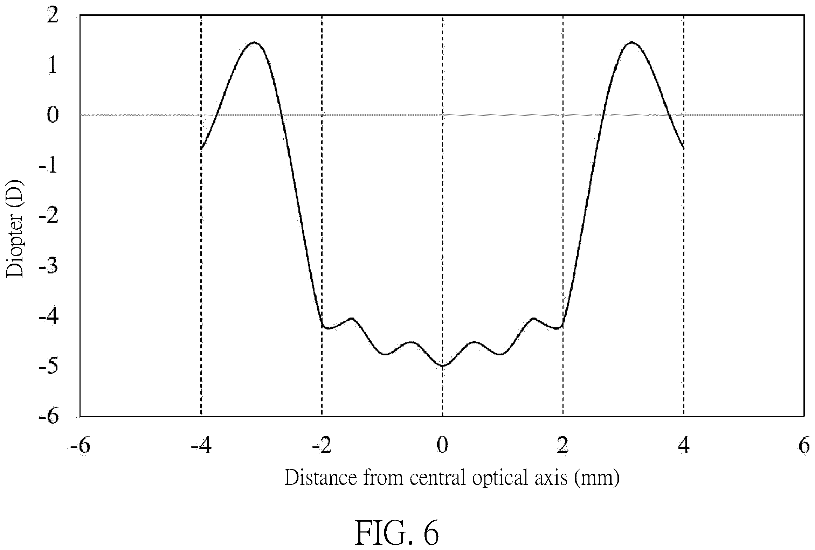

As shown in FIG. 6, when the myopia control contact lens 10 utilizes the four spherical aberration changes in the accommodative regulation area A2, the first diopter distribution varies along the radial direction Dr and exhibits two regional maximum areas and two regional minimum areas. Starting from the edge of the central correction area A1, the first diopter distribution continuously increases to the maximum in a first one of the regional maximum areas, then continuously decreases to the minimum in a first one of the first regional minimum areas, then continues to increase to the maximum in a second one of the regional maximum areas, and then decreases to the minimum in a second one of the regional minimum areas, and finally increases towards the edge of the defocus area A3. In the first diopter distribution shown in FIG. 6, all diopter values are greater than the predetermined diopter. Along the radial direction Dr, a first region in the first diopter distribution is a regional maximum area, multiple regional maximum areas and multiple regional minimum areas are arranged alternately, a diopter maximum in each of the regional maximum areas is greater than diopter minima of the two adjacent regional minimum areas in the radial direction Dr. Therefore, the first diopter distribution presents two continuous S-shapes inclined towards the positive diopter range.

It should be conceivable that when the myopia control contact lens 10 utilizes six spherical aberration changes in the accommodative regulation area A2, the first diopter distribution varies along the radial direction Dr, exhibiting three regional maximum areas and three regional minimum areas. When the myopia control contact lens 10 utilizes eight spherical aberration changes in the accommodative regulation area A2, the first diopter distribution varies along the radial direction Dr, exhibiting four regional maximum areas and four regional minimum areas.

It should be noted that in this embodiment, a maximum variation of the N spherical aberration changes in the accommodative regulation area A2 (e.g., a maximum variation relative to the predetermined diopter) is constrained by the diopter distribution in the defocus zone A3. More details on this are provided below.

As shown in FIG. 1, the defocus area A3 surrounds the accommodative regulation area A2, and as described above, the defocus area A3 is located within the third outer diameter range r3 and presents the second diopter distribution along the radial direction Dr.

In the embodiment of the present invention, the defocus area A3 is used to adjust a defocus characteristic of the to-be-adjusted eye to a myopic defocus state. In detail, peripheral defocus refers to a defocus state observed on the peripheral retina after refractive correction, measured in diopters (D). In current myopia control contact lenses, clinical testing often focuses on adjusting the peripheral retina at the temporal side to the myopic defocus state, neglecting an asymmetry between the peripheral retina at the nasal side and the temporal side. Due to the insufficient myopic defocus on the peripheral retina at the nasal side, hyperopic defocus occurs after correction.

To address this issue, the present invention calculates required peripheral defocus for each myopic degree in the defocus area A3 based on clinical results. This calculation ensures that both the peripheral retina at the nasal side and the temporal side exhibit peripheral myopic defocus effectively. Therefore, the defocus zone A3 of the myopia control contact lens 10 is designed to enable the second diopter distribution thereof to be a defocus variable added by the predetermined diopter used for complete correction in the central correction area A1. The defocus variable meets the following equation:

$$Y=a*X^2+b*X+c;$$

where X is the predetermined diopter, Y is a defocus variable, a is a first coefficient, b is a second coefficient, c is a constant, a and b range from 0 to 5, and c ranges from 0.5 to 15.

In a preferred embodiment of the present invention, a and b range from 0.05 to 0.2, and c ranges from 0.5 to 10. More preferably, a ranges from 0.08 to 0.17, b ranges from 0.08 to 0.17, and c ranges from 1 and 8.

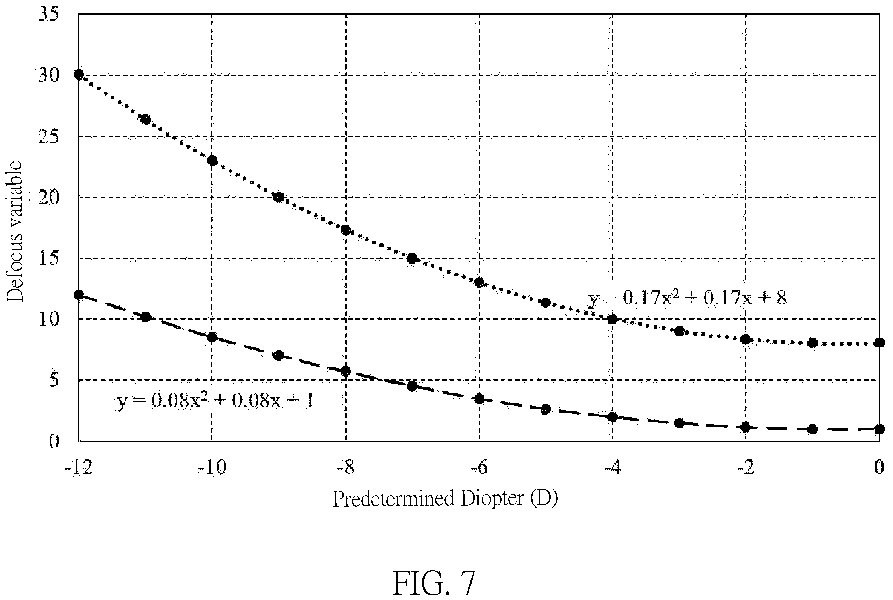

FIG. 7 is a graph showing a defocus variable versus a predetermined diopter according to one embodiment of the present invention. Referring FIG. 7, two relational expressions can be obtained according to boundary conditions mentioned above: $Y=0.08*X^2+0.08*X+1$ and $Y=0.17*X^2+0.17*X+8$. Therefore, from a range defined by these two relational expressions, it is evident that the defocus variable in the defocus area A3 can be adjusted according to different degrees of myopia. For myopia degrees ranging from 0 to -12D, the defocus variable can be adjusted to approximately 1 to 30 times the predetermined diopter.

In addition, the second diopter distribution can include an increasing diopter area and a decreasing diopter area in sequence along the radial direction Dr, and the increasing diopter area and the decreasing diopter area use a regional maximum diopter as a dividing point. The regional maximum diopter can be represented by a diopter difference between it and the predetermined diopter, and can be used to set the maximum variation of the N spherical aberration changes in the accommodative regulation area A2 and all diopters of the first diopter distribution. In this embodiment, according to clinical experiment results, the maximum variation of the N spherical aberration changes falls within a range of the defocus variable multiplied by a first predetermined magnification. In a preferred embodiment, the first predetermined magnification can range from 0.01 to 0.9; more preferably, the first predetermined magnification can range from 0.01 to 0.5. Furthermore, all the diopter values in the first diopter distribution are smaller than the regional maximum diopter.

Therefore, as shown in FIG. 4, when the defocus variable is a curve of $Y=0.08*X^2+0.08*X+1$, the defocus variable corresponding to myopia -1D is 1, and the maximum diopter is 0. When the radius is 0 mm, the corresponding predetermined diopter is approximately -1D. As a distance from the virtual central optical axis C increases, the diopter gradually increases. Therefore, based on the predetermined diopter, the maximum variation of the spherical aberration changes in the accommodative regulation area A2 is 0.2, which is 0.2 times the defocus variable, and the maximum variation is within a range defined by the first predetermined magnification, i.e., from 0.01 to 0.9.

Therefore, as shown in FIG. 5, the diopter values of the central correction area A1, the accommodative regulation area A2, and the defocus area A3 change continuously. In addition, the increasing diopter area and the decreasing diopter area of the second diopter distribution arranged in sequence along the radial direction Dr use a regional minimum diopter as a dividing point. For example, when the defocus variable is a curve of $Y=0.17*X^2+0.17*X+8$, the defocus variable corresponding to myopia of -11D is 26.7. The maximum diopter is approximately 15.7. At a radius of 0mm, the corresponding predetermined diopter is about -11D. As the distance from the virtual central axis C increases, the diopter gradually increases. Therefore, based on the predetermined diopter, the maximum variation of the spherical aberration changes in the accommodative regulation area A2 is 2.67, which is 0.1 times the maximum diopter, and the maximum variation is within a range defined by the first predetermined magnification, i.e., from 0.01 to 0.9.

Referring to Table 1 below, the curve $Y=0.17*X^2+0.17*X+8$ in FIG. 7 corresponding to the maximum diopter and the maximum variation of each spherical aberration change under different predetermined diopters are shown.

| Predetermined diopter | -1D | -3D | -7D | -9D | -2D |
|---|---|---|---|---|---|
| N spherical aberration | 2 | 4 | 1 | 4 | 3 |
| Maximum diopter | 7 | 6 | 8.1 | 11.2 | 18.4 |
| Maximum variation of spherical aberration changes | 0.08 | 0.36 | 6.81 | 10.12 | 9.13 |
| First predetermined magnification | 0.01 | 0.04 | 0.45 | 0.5 | 0.3 |

FIG. 6 shows another preferred embodiment of the present invention, in which the diopter values of the central correction area A 1, the accommodative regulation area A2 and the defocus area A3 vary continuously. In addition, the increasing diopter area and the decreasing diopter area of the second diopter distribution arranged in sequence along the radial direction Dr use a regional minimum diopter as a dividing point. For example, the defocus variable corresponding to myopia -5D is 6.4. The maximum diopter is approximately 1.4. At a radius of 0mm, the corresponding predetermined diopter is about -5D. As the distance from the virtual central axis C increases, the diopter gradually increases correspondingly. Therefore, based on the predetermined diopter, the maximum variation of the spherical aberration changes in the accommodative regulation area A2 is approximately 0.96, which is 0.15 times the defocus variable, and the maximum variation is within a range defined by the first predetermined magnification, i.e., from 0.01 to 0.9.

It should be noted that in terms of accommodative ability, the myopia control contact lens of the present embodiment can provide the corrected eye with better accommodative capabilities compared to the existing myopia control contact lenses. In detail, during an accommodation ability experiment, subjects wore both the myopia control contact lens of this embodiment and existing myopia control lenses. Under three different conditions of accommodation demand, accommodation lags of the subjects' eyes are tested. The experimental results show that the myopia control contact lens of the embodiment of the present invention has a lower accommodative hysteresis than the existing myopia control lenses under the same conditions. In other words, the eye corrected with the myopia control contact lens of this embodiment exhibits better accommodation abilities, giving it an advantage in myopia control.

In addition to the accommodative response, the myopia control contact lens of this embodiment also demonstrates significantly lower accommodative microfluctuations compared to the existing myopia control contact lenses. In detail, during an accommodative microfluctuation experiment, subjects wore both the myopia control contact lens of the present invention and the existing myopia control lenses. Under seven different test conditions, the accommodative microfluctuations of the subjects' eyes were measured. The experimental results indicate that the accommodative microfluctuations of the existing myopia control lenses range between 60 and 75 under various conditions. In contrast, the accommodative microfluctuations of the myopia control contact lens of the present invention are consistently lower than those of the existing myopia control lenses. The test results indicate that the myopia control lens of this embodiment exhibits smaller accommodative microfluctuations, which means it has higher stability on dynamic accommodation.

Therefore, after correction with the myopia control contact lens of this embodiment, the corrected eye can maintain more stable and continuous focus on the central retina during accommodation, reducing the occurrence of blurred images on the retina. Therefore, clinically, the myopia control contact lens of this embodiment can slow axial elongation of the eye. This effectively controls myopia progression and prevents further worsening of the condition.

Additionally, experiments have shown that both the myopia control contact lens of the present invention and the existing myopia control lenses can adjust the peripheral retina on the temporal side (in a range where retinal eccentricity is greater than 0 degrees) to a state of myopic defocus. However, since the existing myopia control contact lenses do not account for the asymmetry between the peripheral retina at the nasal side and the temporal side, the myopic defocus effect on the peripheral retina at the nasal side (in a range where the retinal eccentricity is less than 0 degrees) is insufficient. As a result, hyperopic defocus still occurs on the peripheral retina at the nasal side after correction. This hyperopic defocus causes an image focus to fall behind the macular region of the retina, which in turn promotes axial elongation, thus worsening myopia.

The myopia control contact lens in this embodiment of the present invention is designed to address the asymmetry between the peripheral retina at the nasal side and temporal side, and after correction, hyperopic defocus can also be provided at the nasal side (the range of retinal eccentricity less than 0 degrees). Therefore, by positioning the image focus in front of the macular region of the retina, axial elongation is effectively inhibited, thereby achieving the goal of controlling myopia.

[Beneficial Effects of the Embodiments]

Therefore, the myopia control contact lens provided by the present invention can achieve complete correction in the central correction area, thereby enhancing vision quality. Additionally, by configuring at least one spherical aberration change in the accommodative regulation area, the accommodation lag and the accommodative microfluctuations can be reduced. On the other hand, in the defocus area, the defocus variable is designed according to the myopia degree of a to-be-corrected eye, which can increase myopic shift on the peripheral retina, thereby achieving fully retinal myopic defocus. Through the aforementioned configurations, the myopia control contact lenses provided by the present invention can effectively suppress the progression of myopia.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A myopia control contact lens (10), **characterized by** comprising:

   a central correction area (A1) providing a predetermined diopter;
   an accommodative regulation area (A2) surrounding the central correction area (A1), wherein the accommodative regulation area (A2) has a first diopter distribution with N spherical aberration changes in a radial direction (Dr), and N is a positive integer;
   a defocus area (A3) surrounding the accommodative regulation area (A2), wherein the defocus area (A3) has a second diopter distribution in the radial direction (Dr),
   wherein a maximum diopter of the second diopter distribution is obtained by adding a defocus variable to the predetermined diopter, and the defocus variable satisfies the following equation:

   $$Y = a*X^2 + b*X + c;$$

   wherein X is the predetermined diopter, Y is a defocus variable, a is a first coefficient, b is a second coefficient, c is a constant, a and b range from 0 to 5, and c ranges from 0.5 to 15.

2. The myopia control contact lens (10) according to claim 1, wherein each of diopters of the first diopter distribution is greater than the predetermined diopter.

3. The myopia control contact lens (10) according to claim 1, wherein the first diopter distribution has one or more regional maxima and one or more regional minima with a total quantity of M, wherein M is an integer and equal to N minus 1 when N is an odd, or equal to N when N is an even.

4. The myopia control contact lens (10) according to claim 1, wherein the second diopter distribution sequentially includes an increasing diopter area and a decreasing diopter area along the radial direction (Dr).

5. The myopia control contact lens according to claim 4, wherein the second diopter distribution includes a regional maximum diopter, and the increasing diopter area and the decreasing diopter area use the regional maximum diopter as a dividing point.

6. The myopia control contact lens (10) according to claim 1, wherein a maximum variation of the N spherical aberration changes of the accommodative regulation area (A2) is within a range of the defocus variable multiplied by a first predetermined magnification that ranges from 0.01 to 0.9.

7. The myopia control contact lens (10) according to claim 1, wherein the central correction area (A1) is located within a first radius range (R1), the an accommodative regulation area (A2) is located within the first radius range (R1) and a second radius range (R2), and the defocus area (A3) is located within the second radius range (R2) and a third radius range (R3).

8. The myopia control contact lens (10) according to claim 7, wherein the first radius range (R1) is between 0 mm to 0.5 mm.

9. The myopia control contact lens (10) according to claim 7, wherein the second radius range (R2) includes the first radius range (R1) and a second outer diameter range (r2), and the second outer diameter range (r2) is between 0.5 mm to 2 mm.

10. The myopia control contact lens (10) according to claim 7, wherein the third radius range (R3) includes the second radius range (R2) and a third outer diameter range (r3), and the third outer diameter range (r3) is greater than 2 mm.

11. The myopia control contact lens (10) according to claim 1, wherein the diopters of the central correction area (A1), the accommodative regulation area (A2) and the defocus area (A3) vary continuously.

12. The myopia control contact lens according to claim 1, wherein a ranges from 0 and 5, b ranges from 0 and 5, and c ranges from 0.5 and 15.

13. The myopia control contact lens according to claim 1, wherein the central correction area (A1) has a circular shape, and the accommodative regulation area (A2) and the defocus area (A3) each have a generally annular shape, and the accommodative regulation area (A2) is used to adjust an accommodation lag of a to-be-adjusted eye and reduce a variation of an accommodative microfluctuation of the to-be-adjusted eye.

14. The myopia control contact lens according to claim 1, wherein the defocus area (A3) is used to adjust a defocus characteristic of a to-be-adjusted eye to a myopic defocus state, the defocus characteristic corresponds to a nasal peripheral region of the to-be-adjusted eye, the nasal peripheral region is located within a range of a retinal eccentricity being less than 0 degrees, and the defocus variable changes with the predetermined diopter in the defocus area (A3), and the defocus variable falls within a range of 1 to 30 times the predetermined diopter.

15. The myopia control contact lens according to claim 3, wherein the central correction area (A1) has the predetermined diopter for completely correcting a myopia degree of a to-be-adjusted eye.

FIG. 1

FIG. 2

FIG. 3

EP 4 644 975 A1

FIG. 4

EP 4 644 975 A1

FIG. 5

FIG. 6

Distance from central optical axis (mm)

Diopter (D)

FIG. 7

EP 4 644 975 A1

Europäisches
Patentamt
European
Patent Office
Office européen
des brevets

# EUROPEAN SEARCH REPORT

**Application Number**

EP 24 22 3431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 209 535 B2 (HOLDEN BRIEN VISION INST [AU]) 19 February 2019 (2019-02-19) * figures 17, 19, 20, 25, 29, 52 * * column 1, line 21 - line 48 * * column 4, line 32 - line 51 * * column 15, line 63 - column 17, line 22 * ----- | 1-15 | INV. G02C7/02 G02C7/04 |
| X | US 2010/036489 A1 (LINDACHER JOSEPH MICHAEL [US] ET AL) 11 February 2010 (2010-02-11) | 1,6-15 | |
| A | * figure 2 * * paragraphs [0002] - [0004], [0007] * ----- | 3-5 | |
| X | CN 220 455 624 U (NANJING BOSHI MEDICAL TECH CO LTD) 6 February 2024 (2024-02-06) * the whole document * ----- | 1-15 | |
| A | US 2023/113972 A1 (QI HUA [JP]) 13 April 2023 (2023-04-13) * the whole document * ----- | 1-15 | TECHNICAL FIELDS SEARCHED (IPC) G02C |

The present search report has been drawn up for all claims

| Place of search | Date of completion of the search | Examiner |
|---|---|---|
| Munich | 22 May 2025 | Vazquez Martinez, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 3431

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | Publication date | Patent family member(s) | | Publication date |
|---|---|---|---|---|---|
| US 10209535 | B2 | 19-02-2019 | AU | 2013243237 A1 | 30-10-2014 |
| | | | AU | 2018214108 A1 | 30-08-2018 |
| | | | AU | 2020260384 A1 | 19-11-2020 |
| | | | AU | 2023202106 A1 | 04-05-2023 |
| | | | AU | 2025202416 A1 | 24-04-2025 |
| | | | BR | 112014024834 B1 | 25-05-2021 |
| | | | CA | 2869506 A1 | 10-10-2013 |
| | | | CN | 104321037 A | 28-01-2015 |
| | | | CN | 105974606 A | 28-09-2016 |
| | | | EP | 2833848 A1 | 11-02-2015 |
| | | | ES | 2909748 T3 | 10-05-2022 |
| | | | FR | 2989179 A3 | 11-10-2013 |
| | | | HK | 1206583 A1 | 15-01-2016 |
| | | | HU | E058221 T2 | 28-07-2022 |
| | | | JP | 7362803 B2 | 17-10-2023 |
| | | | JP | 2015514233 A | 18-05-2015 |
| | | | JP | 2018022166 A | 08-02-2018 |
| | | | JP | 2020074004 A | 14-05-2020 |
| | | | JP | 2022062215 A | 19-04-2022 |
| | | | KR | 20150054709 A | 20-05-2015 |
| | | | MY | 170667 A | 26-08-2019 |
| | | | NZ | 700751 A | 30-09-2016 |
| | | | SG | 11201406325T A | 27-11-2014 |
| | | | TW | 201346374 A | 16-11-2013 |
| | | | US | 2013278888 A1 | 24-10-2013 |
| | | | US | 2015153587 A1 | 04-06-2015 |
| | | | US | 2015185501 A1 | 02-07-2015 |
| | | | US | 2017115508 A1 | 27-04-2017 |
| | | | US | 2017212363 A1 | 27-07-2017 |
| | | | US | 2018335648 A1 | 22-11-2018 |
| | | | US | 2019227344 A1 | 25-07-2019 |
| | | | US | 2019235278 A1 | 01-08-2019 |
| | | | US | 2021191157 A1 | 24-06-2021 |
| | | | US | 2021271110 A1 | 02-09-2021 |
| | | | US | 2023350232 A1 | 02-11-2023 |
| | | | US | 2024160044 A1 | 16-05-2024 |
| | | | WO | 2013149303 A1 | 10-10-2013 |
| US 2010036489 | A1 | 11-02-2010 | AU | 2009282321 A1 | 18-02-2010 |
| | | | BR | PI0916627 A2 | 17-11-2015 |
| | | | CA | 2731330 A1 | 18-02-2010 |
| | | | CN | 102119354 A | 06-07-2011 |
| | | | CN | 103257458 A | 21-08-2013 |
| | | | EP | 2321690 A2 | 18-05-2011 |
| | | | JP | 5866696 B2 | 17-02-2016 |
| | | | JP | 2011530726 A | 22-12-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 22 3431

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | Publication date | Patent family member(s) | | Publication date |
|---|---|---|---|---|---|
| | | | KR 20110040983 A | | 20-04-2011 |
| | | | MY 153765 A | | 13-03-2015 |
| | | | RU 2011106763 A | | 20-09-2012 |
| | | | TW 201011371 A | | 16-03-2010 |
| | | | US 2010036489 A1 | | 11-02-2010 |
| | | | WO 2010019397 A2 | | 18-02-2010 |
| CN 220455624 U | | 06-02-2024 | NONE | | |
| US 2023113972 A1 | | 13-04-2023 | CN 114930229 A | | 19-08-2022 |
| | | | EP 4123362 A1 | | 25-01-2023 |
| | | | JP 7358619 B2 | | 10-10-2023 |
| | | | JP WO2021186878 A1 | | 23-09-2021 |
| | | | KR 20220100981 A | | 18-07-2022 |
| | | | TW 202136865 A | | 01-10-2021 |
| | | | US 2023113972 A1 | | 13-04-2023 |
| | | | WO 2021186878 A1 | | 23-09-2021 |

EPO FORM P0459

For more details about this annex : see Official Journal of the European Patent Office, No. 12/82

page 2 of 2